# EUROPEAN PATENT APPLICATION

(11) **EP 4 668 222 A1**
(43) Date of publication of application: **24.12.2025**
(21) Application number: 23922372.0
(22) Date of filing: 03.11.2023
(51) Int. Cl.: G06V 10/25, G06T 7/11, G06T 7/73, G06T 7/80, G06V 10/24, G06V 10/26, G06V 10/34, G06V 20/56

(54) **AUTOMATIC CONTAINER PICKUP METHOD AND APPARATUS FOR AUTOMATED STRADDLE CARRIER, ELECTRONIC DEVICE AND STORAGE MEDIUM**

(30) Priority: 17.02.2023 CN 202310130408
(71) Applicant: Shanghai Westwell Technology Co., Ltd., Shanghai 200050 (CN)
(72) Inventor: TAN, Limin, Shanghai 200050 (CN); MA, Peili, Shanghai 200050 (CN); ZHOU, Xiaokai, Shanghai 200050 (CN); SUN, Zuolei, Shanghai 200050 (CN); RAO, Bingbing, Shanghai 200050 (CN)
(74) Representative: De Vries & Metman
(86) International application number: PCT/CN2023/129526
(87) International publication number: WO 2024/169256

(57) **Abstract**

Provided in the present invention are an automatic container pickup method and apparatus for an automated straddle carrier, an electronic device and a storage medium. The method comprises: in response to an automated straddle carrier being located at a set container pickup position, determining, according to the relative position of the automated straddle carrier and bay lines of a container to be aligned, a predicted position of the bay lines in an image collected by a visual sensor module of the automated straddle carrier; on the basis of the predicted position, detecting the bay lines in the image; aligning intersection points of the detected bay lines in the image collected by the visual sensor module of the automated straddle carrier to preset bay line intersection points, so as to adjust the container pickup position of the automated straddle carrier to a quasi-alignment position; and aligning a lock hole center position in the image collected by the visual sensor module of the automated straddle carrier to a preset hook position, so as to adjust the container pickup position of the automated straddle carrier from the quasi-alignment position to an alignment position. The present invention improves the alignment precision of automatic container pickup, thus avoiding container pickup failures.

## Description

### TECHNICAL FIELD

The present disclosure relates to the field of machine vision and image processing, and particularly to an automatic container grabbing method and apparatus for an unmanned straddle carrier, an electronic device and a storage medium.

### BACKGROUND

In smart ports, straddle carriers are widely used in grabbing and releasing containers. Traditional straddle carriers require manual operations. Nowadays, more and more container grabbing is accomplished by using of lock-hole detection methods. However, accuracy of lock-hole recognition varies significantly under different lighting conditions, which directly increases incidences of grabbing failures.

Therefore, how to improve alignment accuracy of lock-holes so as to avoid grabbing failures is a technical problem urgently needing resolution by those skilled in the art.

### SUMMARY

To overcome defects of the above-mentioned prior art, the present disclosure provides an automatic container grabbing method and apparatus for an unmanned straddle carrier, an electronic device and a storage medium, so as to improve lock-hole alignment accuracy and avoid grabbing failures.

One aspect of the present disclosure provides an automatic container grabbing method for an unmanned straddle carrier, including steps of: in response to the unmanned straddle carrier being located at a set grabbing position, determining, according to relative positions between the unmanned straddle carrier and bay lines of a container to be aligned, predicted positions of the bay lines within an image captured by a vision sensor module of the unmanned straddle carrier; detecting the bay lines in the image based on the predicted positions; aligning intersection points of detected bay lines in the image captured by the vision sensor module of the unmanned straddle carrier to preset bay line intersection points, so as to adjust a grabbing position of the unmanned straddle carrier to a quasi-alignment position; and aligning center positions of lock-holes in the image captured by the vision sensor module of the unmanned straddle carrier to preset hook positions, so as to adjust the grabbing position of the unmanned straddle carrier from the quasi-alignment position to an alignment position.

In some embodiments of the present disclosure, the step of determining, according to relative positions between the unmanned straddle carrier and bay lines of a container to be aligned, predicted positions of the bay lines within an image captured by a vision sensor module of the unmanned straddle carrier includes: determining a region of interest for the bay lines within the image captured by the vision sensor module of the unmanned straddle carrier, according to the relative positions between the unmanned straddle carrier and the bay lines of the container to be aligned, wherein the bay lines in the image are detected within the region of interest.

In some embodiments of the present disclosure, the step of detecting the bay lines in the image based on the predicted positions includes: segmenting the image to obtain a plurality of segmentation results; searching for segmentation results matching pre-stored bay line features as the bay lines in the image, within set ranges around the predicted positions.

In some embodiments of the present disclosure, after the step of detecting the bay lines in the image based on the predicted positions, and before the step of aligning intersection points of detected bay lines in the image captured by the vision sensor module of the unmanned straddle carrier to preset bay line intersection points, so as to adjust a grabbing position of the unmanned straddle carrier to a quasi-alignment position, the method further includes: skeletonizing the bay lines in the image to obtain the intersection points of the detected bay lines.

In some embodiments of the present disclosure, before the step of aligning center positions of lock-holes in the image captured by the vision sensor module of the unmanned straddle carrier to preset hook positions, so as to adjust the grabbing position of the unmanned straddle carrier from the quasi-alignment position to an alignment position, the method further includes: segmenting the image to obtain a plurality of segmentation results; searching for segmentation results matching pre-stored lock-hole features as the lock-holes in the image, and determining the center positions of the lock-holes in the image.

In some embodiments of the present disclosure, the step of in response to the unmanned straddle carrier being located at a set grabbing position, determining, according to relative positions between the unmanned straddle carrier and bay lines of a container to be aligned, predicted positions of the bay lines within an image captured by a vision sensor module of the unmanned straddle carrier includes steps of: acquiring positioning information of the unmanned straddle carrier from a positioning module of the unmanned straddle carrier; determining position information of the bay lines of the container to be aligned from a preset map; determining the relative positions between the unmanned straddle carrier and the bay lines of the container to be aligned according to the positioning information of the unmanned straddle carrier and the position information of the bay lines of the container to be aligned.

In some embodiments of the present disclosure, the step of determining the relative positions between the unmanned straddle carrier and the bay lines of the container to be aligned according to the positioning information of the unmanned straddle carrier and the position information of the bay lines of the container to be aligned includes: determining the relative positions between the unmanned straddle carrier and the bay lines of the container to be aligned within map coordinates of the preset map, according to the positioning information of the unmanned straddle carrier and the position information of the bay lines of the container to be aligned.

Another aspect of the present disclosure provides an automatic container grabbing apparatus for the unmanned straddle carrier, including: a predicted position determination module, configured to in response to the unmanned straddle carrier being located at a set grabbing position, determine, according to relative positions between the unmanned straddle carrier and bay lines of a container to be aligned, predicted positions of the bay lines within an image captured by a vision sensor module of the unmanned straddle carrier; a bay line detection module, configured to detect the bay lines in the image based on the predicted positions; a first grabbing position adjustment module, configured to align intersection points of detected bay lines in the image captured by the vision sensor module of the unmanned straddle carrier to preset bay line intersection points, so as to adjust a grabbing position of the unmanned straddle carrier to a quasi-alignment position; a second grabbing position adjustment module, configured to align center positions of lock-holes in the image captured by the vision sensor module of the unmanned straddle carrier to preset hook positions, so as to adjust the grabbing position of the unmanned straddle carrier from the quasi-alignment position to an alignment position.

Another aspect of the present disclosure provides an electronic device, including: a processor; a memory having computer programs stored thereon, wherein the computer programs, when executed by the processor, implement the above-mentioned automatic container grabbing method for the unmanned straddle carrier.

Another aspect of the present disclosure provides a computer storage medium having computer programs stored thereon, wherein the computer programs, when executed by a processor, implement the above-mentioned automatic container grabbing method for the unmanned straddle carrier.

Compared with the prior art, the present disclosure has following advantages.

On one hand, the step of adjusting the grabbing position is divided into bay line coarse positioning and lock-hole fine alignment, thereby enabling the fine alignment based on the coarse positioning, and avoiding grabbing failures caused by misdetection. On the other hand, detecting the bay line based on the predicted positions improves efficiency of bay line detection and ensures stability of bay line extraction. Furthermore, the coarse positioning is performed by aligning the intersection points of the detected bay lines to the preset bay line intersection points, which ensures the straddle carrier is in a relatively centered position and parallel to the container, thereby facilitating the lock-hole alignment. Moreover, the fine alignment is performed by aligning the center positions of the lock-holes to the preset hook positions through the image, allowing real-time adjustment based on grabbing states, thereby ensuring success of grabbing.

### BRIEF DESCRIPTION OF THE DRAWINGS

The above-mentioned and other features and advantages of the present disclosure will become more obvious by referring to attached drawings describing example embodiments in detail.
FIG. 1 shows a flowchart of an automatic container grabbing method for an unmanned straddle carrier according to an embodiment of the present disclosure;
FIG. 2 shows a schematic diagram of determining predicted positions of bay lines within an image captured by a vision sensor module of the unmanned straddle carrier according to an embodiment of the present disclosure;
FIG. 3 shows a schematic diagram of detecting and skeletonizing the bay lines in the image according to an embodiment of the present disclosure;
FIG. 4 shows a schematic diagram of aligning intersection points of detected bay lines in the image captured by the vision sensor module of the unmanned straddle carrier to preset bay line intersection points according to an embodiment of the present disclosure;
FIG. 5 shows a flowchart of the automatic container grabbing method for the unmanned straddle carrier according to a specific embodiment of the present disclosure;
FIG. 6 shows an automatic container grabbing apparatus for the unmanned straddle carrier according to an embodiment of the present disclosure;
FIG. 7 schematically shows a computer-readable storage medium in an exemplary embodiment of the present disclosure;
FIG. 8 schematically shows an electronic device in an exemplary embodiment of the present disclosure.

### DETAILED DESCRIPTION

Exemplary embodiments will now be described more fully with reference to the accompanying drawings. However, the exemplary embodiments can be implemented in various forms and should not be construed as limited to the examples set forth herein; rather, these embodiments are provided so that the present disclosure will be thorough and complete, and will fully convey the concept of the exemplary embodiments to those skilled in the art. The described features, structures, and characteristics may be combined in any suitable manner in one or more embodiments.

Furthermore, the drawings are merely schematic illustrations of the present disclosure and are not necessarily drawn to scale. The same reference numerals in the drawings denote the same or similar parts, and thus their repetitive description will be omitted. Some block diagrams shown in the drawings are functional entities and do not necessarily correspond to physically or logically independent entities. These functional entities may be implemented in software form, or in one or more hardware modules or integrated circuits, or in different networks and/or processor devices and/or microcontroller devices.

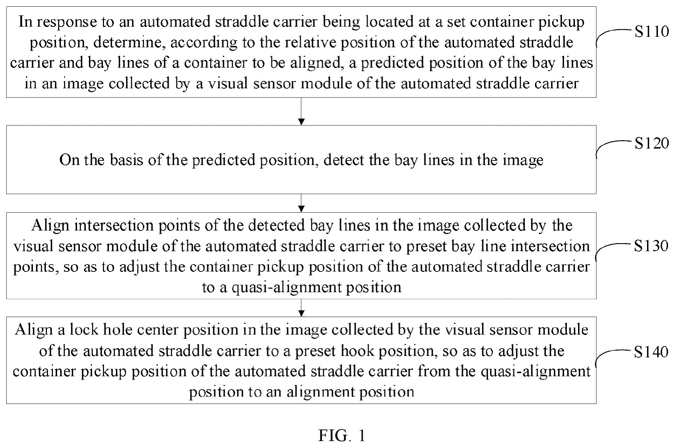

To solve the defects in the prior art, the present disclosure provides an automatic container grabbing method for an unmanned straddle carrier. FIG. 1 shows a flowchart of the automatic container grabbing method for the unmanned straddle carrier. The method shown in FIG. 1 includes the following steps.

Step S110. Acquire positioning information of the unmanned straddle carrier.

Step S120. Determine candidate containers within a set distance range of the unmanned straddle carrier based on the positioning information within a first container map.

Step S130. Compare laser data acquired by a laser sensor of the unmanned straddle carrier with the candidate containers in the first container map to determine whether the candidate containers actually exist.

Step S140. In response to the candidate containers actually existing, store dimension information of the candidate containers into a second container map based on the laser data.

Step S150. Update the positioning information of the unmanned straddle carrier based on the laser data matching a candidate container to be processed and the second container map, wherein the candidate container to be processed is an actually existing candidate container for which a number of matched laser data point clouds exceeds a second set threshold.

In the automatic container grabbing method for the unmanned straddle carrier provided by the present disclosure: on one hand, the step of adjusting the grabbing position is divided into bay line coarse positioning and lock-hole fine alignment, thereby enabling the fine alignment based on the coarse positioning, and avoiding grabbing failures caused by misdetection; on the other hand, detecting the bay line based on the predicted positions improves efficiency of bay line detection and ensures stability of bay line extraction; furthermore, the coarse positioning is performed by aligning the intersection points of the detected bay lines to the preset bay line intersection points, which ensures the straddle carrier is in a relatively centered position and parallel to the container, thereby facilitating the lock-hole alignment; moreover, the fine alignment is performed by aligning the center positions of the lock-holes to the preset hook positions through the image, allowing real-time adjustment based on grabbing states, thereby ensuring success of grabbing.

Specifically, the unmanned straddle carrier in the present disclosure is a straddle carrier used for grabbing and transporting containers. However the present disclosure is not limited to this.

Specifically, Step S110 may include following steps: acquiring positioning information of the unmanned straddle carrier from a positioning module of the unmanned straddle carrier; determining position information of the bay lines of the container to be aligned from a preset map; determining the relative positions between the unmanned straddle carrier and the bay lines of the container to be aligned according to the positioning information of the unmanned straddle carrier and the position information of the bay lines of the container to be aligned.

Wherein, the positioning module of the unmanned straddle carrier may be, for example, a GNSS (Global Navigation Satellite System) module. The present disclosure is not limited to this; other positioning modules are also within the scope of the present disclosure. The preset map may be a high-precision map pre-established based on a port or terminal where the unmanned straddle carrier operates. The high-precision map at least stores the positions of the bay lines for placing container bays within the map. The set grabbing position is a predetermined position near a container to be grabbed, where the unmanned straddle carrier can more easily align the lock-holes and hooks. Specifically, set grabbing positions for each bay can be predefined; further, due to different sizes of the containers to be grabbed, precise alignment of the lock-holes and the hooks needs to be achieved through subsequent steps.

Specifically, since the positions of the bay lines in the map are fixed, the relative positions between the unmanned straddle carrier and the bay lines of the container to be aligned can be determined based on the positioning information of the unmanned straddle carrier and the position information of the bay lines of the container to be aligned. Furthermore, to ensure positional consistency, the relative positions between the unmanned straddle carrier and the bay lines of the container to be aligned within map coordinates of the preset map can be determined based on the positioning information of the unmanned straddle carrier and the position information of the bay lines of the container to be aligned. Thus, errors in relative position calculation caused by using different coordinate systems can be reduced.

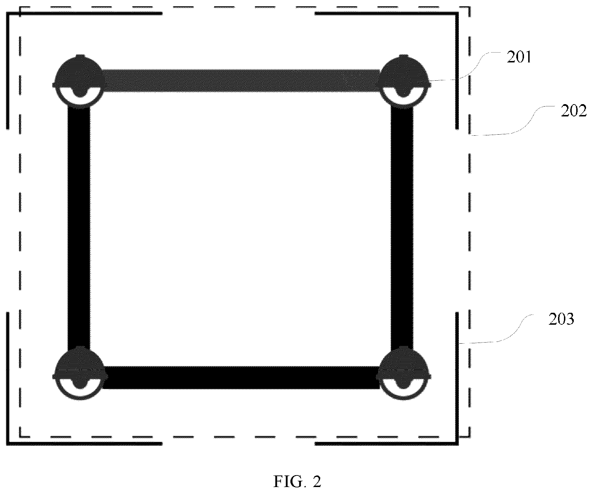

Specifically, since an installation position of the vision sensor on the unmanned straddle carrier is fixed and its field of view can be determined, after knowing the relative positions between the unmanned straddle carrier and the bay lines of the container to be aligned within the preset map, positions of the bay lines of the container to be aligned based on the preset map within the image captured by the vision sensor can be determined. Referring to the image captured by the vision sensor shown in FIG. 2, the positions (indicated by dotted lines) of the bay lines 202 of the container to be aligned based on the preset map within this image can be determined according to the aforementioned steps. The image captured by the vision sensor also shows actual bay lines 203 (indicated by solid lines) and lock-holes 201, etc.

Specifically, Step S110 may further include: determining a region of interest for the bay lines within the image captured by the vision sensor module of the unmanned straddle carrier, according to the relative positions between the unmanned straddle carrier and the bay lines of the container to be aligned, wherein the bay lines in the image are detected within the region of interest. Specifically, as a range indicated by the dotted lines in FIG. 2, the region of interest can be positions of the bay lines 202 of the container to be aligned based on the preset map within the image. In some variations, a margin can be added around the positions of the bay lines 202 of the container to be aligned based on the preset map within the image. For example, expanding the range shown by the dotted lines in FIG. 2 outward by a set distance. Thus, through the region of interest, efficiency and accuracy of bay line detection in subsequent steps can be improved.

Specifically, Step S120 may include: segment the image to obtain a plurality of segmentation results; search for segmentation results matching pre-stored bay line features as the bay lines in the image, within set ranges around the predicted positions. Specifically, image segmentation can be implemented based on a deep learning model. The deep learning model can distinguish pixel regions of different objects in the image. Deep learning models may include but are not limited to VGG16, FCN (Fully Convolutional Network), SegNet (Segmentation Network), DeepLab, etc. The present disclosure is not limited to these. Further, after obtaining pixel regions of different objects through the image segmentation, segmentation results (pixel regions) matching the pre-stored bay line features can be searched for within the set ranges around the predicted positions and identified as the bay lines in the image. This improves bay line detection efficiency. Thus, by determining the predicted positions of the bay lines based on the preset map and detecting the bay lines based on the predicted positions, compared to directly extracting the bay lines, the bay line detection efficiency is improved, and subsequent misselection of intersection points due to segmentation errors is greatly avoided.

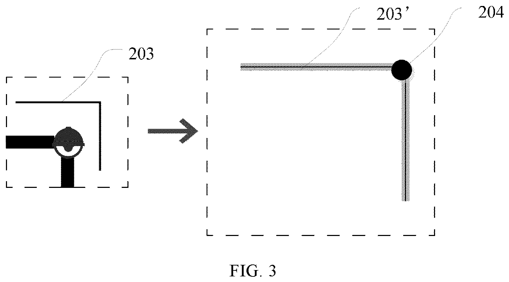

Specifically, before Step S130 and after Step S140, the method may include: skeletonizing the bay lines in the image to obtain the intersection points of the detected bay lines. Specifically, the bay lines in the image can be thinned, and the intersection points of intersecting bay lines can be obtained. As shown in FIG. 3, thin the bay lines 203, skeletonized bay lines 203' can be obtained, and based on the skeletonized bay line 203', bay line intersection points 204 can be obtained. This facilitates subsequent steps of preliminary precise alignment, avoiding difficulties in accurate alignment due to relatively thick bay lines.

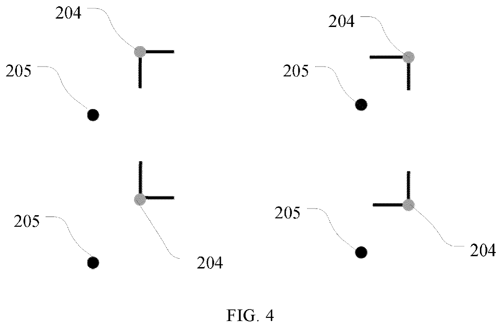

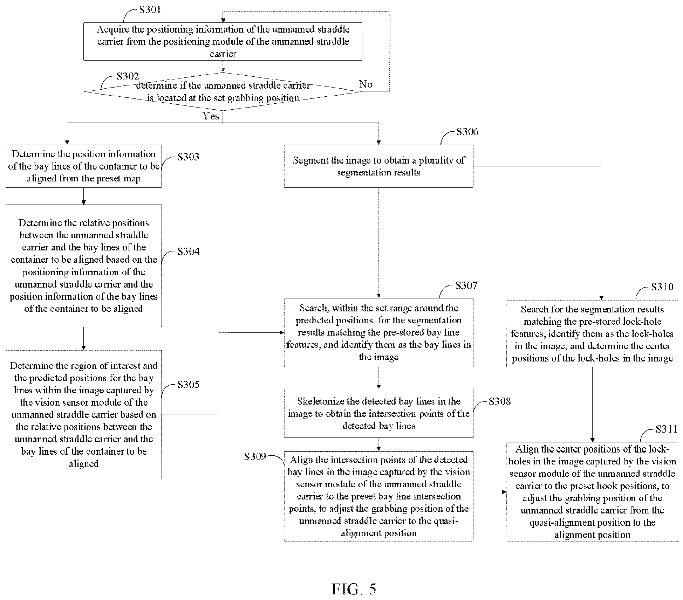

Specifically, according to the skeletonization of the bay lines, intersection points of four corners can be extracted based on the skeletonized bay lines (labeled 204 in FIG. 4). The intersection points 204 are compared with positions of preset optimal bay line intersection points (labeled 205 in FIG. 5) corresponding the container bay, ensuring the unmanned straddle carrier is in a relatively centered position relative to the bay lines and parallel to the container. At this point, the unmanned straddle carrier has completed coarse adjustment of the grabbing position, basically satisfying the alignment of the hooks and the lock-holes. That is, in FIG. 5, the intersection points 204 in the image are aligned to the preset optimal bay line intersection points 205 within the image. Specifically, the intersection points 205 are predetermined through testing or learned via an artificial intelligence model, representing the positions of the bay line intersection points displayed in the image when the hooks and the lock-holes can be aligned. Therefore, the present disclosure achieves alignment using intersection points, which are simple objects, benefiting the system in directional adjustment and alignment recognition, and improving alignment efficiency.

In some embodiments, a vision sensor module (e.g., a camera) can be set on the unmanned straddle carrier, configured such that its field of view covers the four intersection points of the bay lines for alignment. In other embodiments, four vision sensor modules can be set corresponding to the four hooks, and each of the vision sensor modules performs recognition and alignment for one intersection point. The present disclosure is not limited to this, the number of the vision sensor module is not restricted.

Specifically, before Step S140, the method may further include: segmenting the image to obtain a plurality of segmentation results; searching for segmentation results matching pre-stored lock-hole features as the lock-holes in the image, and determining the center positions of the lock-holes in the image. Specifically, image segmentation can be implemented based on a deep learning model. The deep learning model can distinguish pixel regions of different objects. The lock-hole positions are determined by matching pixel regions (segmentation results) with the pre-stored lock-hole features, and the center positions of the lock-holes can be determined. Since the relation between the unmanned straddle carrier and the bay lines has been coarsely adjusted beforehand, compared to methods that only recognize the lock-holes, the present disclosure can filter out the vast majority of erroneous results, significantly improving positioning accuracy of the lock-holes to ensure grabbing success.

Referring now to FIG. 5, showing a flowchart of the automatic container grabbing method for the unmanned straddle carrier according to a specific embodiment of the present disclosure. The method shown in FIG. 5 includes the following steps.

Step S301: Acquire the positioning information of the unmanned straddle carrier from the positioning module of the unmanned straddle carrier.

Step S302: Based on the positioning information, determine if the unmanned straddle carrier is located at the set grabbing position.

If the determination in Step S302 is No, direct the unmanned straddle carrier to move to the set grabbing position based on its positioning information and the set grabbing position, and execute Step S301 again.

If the determination in Step S302 is Yes, execute Step S303: Determine the position information of the bay lines of the container to be aligned from the preset map.

Step S304: Determine the relative positions between the unmanned straddle carrier and the bay lines of the container to be aligned based on the positioning information of the unmanned straddle carrier and the position information of the bay lines of the container to be aligned.

Step S305: Determine the region of interest and the predicted positions for the bay lines within the image captured by the vision sensor module of the unmanned straddle carrier based on the relative positions between the unmanned straddle carrier and the bay lines of the container to be aligned.

Step S306: Segment the image to obtain a plurality of segmentation results.

Step S307: Search, within the set range around the predicted positions, for the segmentation results matching the pre-stored bay line features, and identify them as the bay lines in the image.

Step S308: Skeletonize the detected bay lines in the image to obtain the intersection points of the detected bay lines.

Step S309: Align the intersection points of the detected bay lines in the image captured by the vision sensor module of the unmanned straddle carrier to the preset bay line intersection points, to adjust the grabbing position of the unmanned straddle carrier to the quasi-alignment position.

Step S310: Search for the segmentation results matching the pre-stored lock-hole features, identify them as the lock-holes in the image, and determine the center positions of the lock-holes in the image.

Step S311: Align the center positions of the lock-holes in the image captured by the vision sensor module of the unmanned straddle carrier to the preset hook positions, to adjust the grabbing position of the unmanned straddle carrier from the quasi-alignment position to the alignment position.

The above are merely several specific implementations of the automatic container grabbing method for the unmanned straddle carrier of the present disclosure. These implementations can be realized independently or in combination; the present disclosure is not limited to these. Furthermore, the flowcharts of the present disclosure are only schematic; the execution order of the steps is not limited by them. Splitting, merging, reordering, or other synchronous or asynchronous execution methods of the steps are all within the scope of the present disclosure.

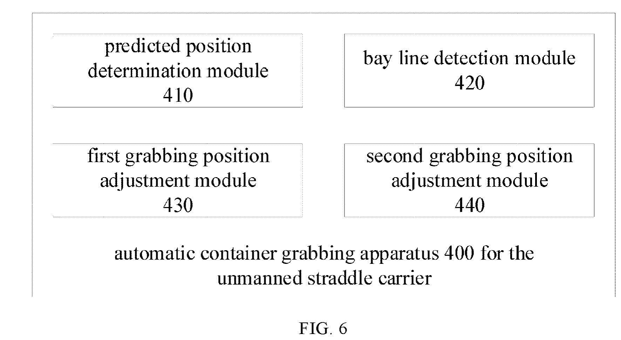

The present disclosure further provides an automatic container grabbing apparatus for the unmanned straddle carrier. FIG. 6 shows a block diagram of the automatic container grabbing apparatus for the unmanned straddle carrier. The automatic container grabbing apparatus 400 for the unmanned straddle carrier includes a predicted position determination module 410, a bay line detection module 420, a first grabbing position adjustment module 430, and a second grabbing position adjustment module 440.

The predicted position determination module 410 is configured to in response to the unmanned straddle carrier being located at a set grabbing position, determine, according to relative positions between the unmanned straddle carrier and bay lines of a container to be aligned, predicted positions of the bay lines within an image captured by a vision sensor module of the unmanned straddle carrier.

The bay line detection module 420 is configured to detect the bay lines in the image based on the predicted positions.

The first grabbing position adjustment module 430 is configured to align intersection points of detected bay lines in the image captured by the vision sensor module of the unmanned straddle carrier to preset bay line intersection points, so as to adjust a grabbing position of the unmanned straddle carrier to a quasi-alignment position.

The second grabbing position adjustment module 440 is configured to align center positions of lock-holes in the image captured by the vision sensor module of the unmanned straddle carrier to preset hook positions, so as to adjust the grabbing position of the unmanned straddle carrier from the quasi-alignment position to an alignment position.

In the automatic container grabbing apparatus for the unmanned straddle carrier provided by the present disclosure: on one hand, the step of adjusting the grabbing position is divided into bay line coarse positioning and lock-hole fine alignment, thereby enabling the fine alignment based on the coarse positioning, and avoiding grabbing failures caused by misdetection; on the other hand, detecting the bay line based on the predicted positions improves efficiency of bay line detection and ensures stability of bay line extraction; furthermore, the coarse positioning is performed by aligning the intersection points of the detected bay lines to the preset bay line intersection points, which ensures the straddle carrier is in a relatively centered position and parallel to the container, thereby facilitating the lock-hole alignment; moreover, the fine alignment is performed by aligning the center positions of the lock-holes to the preset hook positions through the image, allowing real-time adjustment based on grabbing states, thereby ensuring success of grabbing.

FIG. 6 only schematically shows the automatic container grabbing device 400 for the unmanned straddle carrier of the present disclosure. Without departing from the concept of the present disclosure, splitting, merging, or adding modules are within the scope of the present disclosure. The automatic container grabbing device 400 for the unmanned straddle carrier of the present disclosure can be implemented by software, hardware, firmware, plug-ins, or any combination thereof; the present disclosure is not limited to this.

In an exemplary embodiment of the present disclosure, a computer-readable storage medium is also provided, having computer programs stored thereon. When the programs are executed by a processor, it can implement the steps of the automatic container grabbing method for the unmanned straddle carrier as described in any of the foregoing embodiments. In some possible implementations, various aspects of the present disclosure may also be implemented as a program product comprising program code. When the program product runs on a terminal device, the program code causes the terminal device to perform the steps described in the method section above according to various exemplary embodiments of the present disclosure.

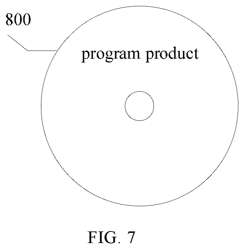

Referring to FIG. 7, a program product 800 for implementing the above method according to an embodiment of the present disclosure is described. It may employ a portable compact disc read-only memory (CD-ROM) and include program code, and can run on a terminal device, such as a personal computer. However, the program product of the present disclosure is not limited to this. In this document, a readable storage medium can be any tangible medium that contains or stores a program for use by or in connection with an instruction execution system, apparatus, or device.

The program product may employ any combination of one or more readable media. The readable medium may be a readable signal medium or a readable storage medium. A readable storage medium may be, for example, but not limited to, an electronic, magnetic, optical, electromagnetic, infrared, or semiconductor system, apparatus, or device, or any combination of the above. More specific examples (a non-exhaustive list) of the readable storage medium include: an electrical connection having one or more wires, a portable disk, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

The computer-readable storage medium may include a propagated data signal with readable program code embodied therein, either in baseband or as part of a carrier wave. Such a propagated signal may take various forms, including but not limited to electromagnetic signals, optical signals, or any suitable combination thereof. A readable storage medium may also be any readable medium other than a readable storage medium that can transmit, propagate, or transport a program for use by or in connection with an instruction execution system, apparatus, or device. Program code embodied on a readable storage medium may be transmitted using any appropriate medium, including but not limited to wireless, wireline, optical fiber cable, RF, etc., or any suitable combination of the foregoing.

Program code for carrying out operations of the present disclosure may be written in any combination of one or more programming languages, including object-oriented programming languages-such as Java, C++, etc., and conventional procedural programming languages-such as the "C" programming language or similar programming languages. The program code may execute entirely on the user's computing device, partly on the user's device, as a stand-alone software package, partly on the user's computing device and partly on a remote computing device, or entirely on the remote computing device or server. In the latter scenario, the remote computing device may be connected to the user's computing device through any type of network, including a local area network (LAN) or a wide area network (WAN), or the connection may be made to an external computing device (for example, through the Internet using an Internet service provider).

In an exemplary embodiment of the present disclosure, an electronic device is also provided. The electronic device may include a processor and a memory for storing executable instructions of the processor. The processor is configured to perform the steps of the automatic container grabbing method for the unmanned straddle carrier as described in any of the foregoing embodiments by executing the executable instructions.

Those skilled in the art will appreciate that aspects of the present disclosure may be embodied as a system, method, or program product. Accordingly, aspects of the present disclosure may take the form of an entirely hardware embodiment, an entirely software embodiment (including firmware, resident software, micro-code, etc.), or an embodiment combining software and hardware aspects, which may all generally be referred to herein as a "circuit", a "module", or a "system".

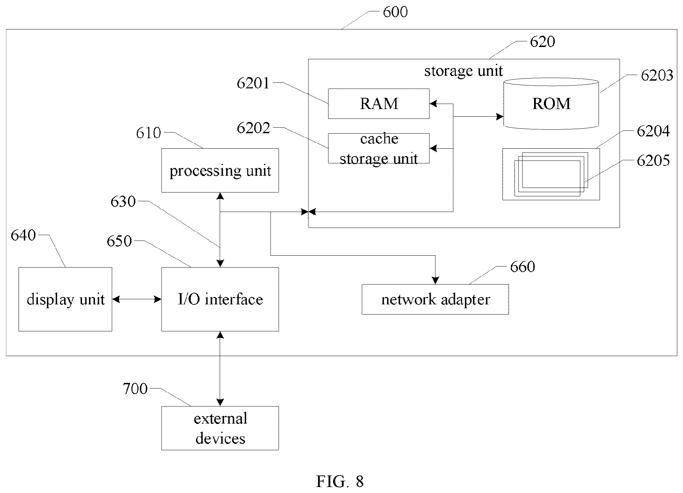

An electronic device 600 according to this embodiment of the present disclosure is described below with reference to FIG. 8. The electronic device 600 shown in FIG. 8 is only an example and should not impose any limitations on the functionality and scope of use of embodiments of the present disclosure.

As shown in FIG. 8, the electronic device 600 is embodied as a general-purpose computing device. Components of electronic device 600 may include, but are not limited to: at least one processing unit 610, at least one storage unit 620, a bus 630 connecting different system components (including the storage unit 620 and the processing unit 610), a display unit 640, etc.

Wherein, the storage unit stores program code which may be executed by the processing unit 610, causing the processing unit 610 to perform the steps described in the method section above according to various exemplary embodiments of the present disclosure. For example, the processing unit 610 may execute the steps shown in FIG. 1.

The storage unit 620 may include readable media in the form of volatile storage units, such as a random access storage unit (RAM) 6201 and/or a cache storage unit 6202, and may further include a read-only storage unit (ROM) 6203.

The storage unit 620 may also include a program/utility 6204 having a set (at least one) of program modules 6205. Such program modules 6205 include, but are not limited to: an operating system, one or more application programs, other program modules, and program data. Each of these examples or some combination thereof may include an implementation of a networking environment.

The bus 630 may represent one or more of several types of bus structures, including a storage unit bus or storage unit controller, a peripheral bus, a graphics acceleration port, a processing unit, or a local bus using any of a variety of bus architectures.

The electronic device 600 may also communicate with one or more external devices 700 (e.g., a keyboard, a pointing device, a Bluetooth device, etc.), and may also communicate with one or more devices that enable a user to interact with the electronic device 600, and/or with any device (e.g., router, modem, etc.) that enables the electronic device 600 to communicate with one or more other computing devices. Such communication may occur via an input/output (I/O) interface 650. Furthermore, the electronic device 600 may also communicate with one or more networks (e.g., a local area network (LAN), a wide area network (WAN), and/or a public network, such as the Internet) via a network adapter 660. The network adapter 660 may communicate with other modules of the electronic device 600 via the bus 630. It should be understood that although not shown, other hardware and/or software modules may be used in conjunction with the electronic device 600, including but not limited to: microcode, device drivers, redundant processing units, external disk drive arrays, RAID systems, tape drives, and data backup storage systems, etc.

Through the description of the above embodiments, those skilled in the art will readily understand that the exemplary embodiments described herein may be implemented by software, or by software in combination with necessary hardware. Therefore, the technical solutions according to the embodiments of the present disclosure may be embodied in the form of a software product, which may be stored on a non-volatile storage medium (which may be a CD-ROM, USB flash drive, portable hard disk, etc.) or on a network, and includes several instructions to cause a computing device (which may be a personal computer, server, or network device, etc.) to execute the automatic container grabbing method for the unmanned straddle carrier according to the embodiments of the present disclosure.

Compared with the prior art, the present disclosure has the following advantages.

On one hand, the step of adjusting the grabbing position is divided into bay line coarse positioning and lock-hole fine alignment, thereby enabling the fine alignment based on the coarse positioning, and avoiding grabbing failures caused by misdetection. On the other hand, detecting the bay line based on the predicted positions improves efficiency of bay line detection and ensures stability of bay line extraction. Furthermore, the coarse positioning is performed by aligning the intersection points of the detected bay lines to the preset bay line intersection points, which ensures the straddle carrier is in a relatively centered position and parallel to the container, thereby facilitating the lock-hole alignment. Moreover, the fine alignment is performed by aligning the center positions of the lock-holes to the preset hook positions through the image, allowing real-time adjustment based on grabbing states, thereby ensuring success of grabbing.

Those skilled in the art, after considering the specification and practicing the invention disclosed herein, will readily conceive of other implementations of the present disclosure. The present disclosure is intended to cover any variations, uses, or adaptations of the present disclosure following the general principles thereof and including common general knowledge or customary technical means in the art not disclosed herein. The description and examples are to be regarded as exemplary only, with the true scope and spirit of the present disclosure being indicated by the appended claims.

## Claims

1. An automatic container grabbing method for an unmanned straddle carrier, comprising steps of:
in response to the unmanned straddle carrier being located at a set grabbing position, determining, according to relative positions between the unmanned straddle carrier and bay lines of a container to be aligned, predicted positions of the bay lines within an image captured by a vision sensor module of the unmanned straddle carrier;
detecting the bay lines in the image based on the predicted positions;
aligning intersection points of detected bay lines in the image captured by the vision sensor module of the unmanned straddle carrier to preset bay line intersection points, so as to adjust a grabbing position of the unmanned straddle carrier to a quasi-alignment position; and
aligning center positions of lock-holes in the image captured by the vision sensor module of the unmanned straddle carrier to preset hook positions, so as to adjust the grabbing position of the unmanned straddle carrier from the quasi-alignment position to an alignment position.

2. The automatic container grabbing method for the unmanned straddle carrier according to claim 1, wherein the step of determining, according to relative positions between the unmanned straddle carrier and bay lines of a container to be aligned, predicted positions of the bay lines within an image captured by a vision sensor module of the unmanned straddle carrier comprises:
determining a region of interest for the bay lines within the image captured by the vision sensor module of the unmanned straddle carrier, according to the relative positions between the unmanned straddle carrier and the bay lines of the container to be aligned, wherein the bay lines in the image are detected within the region of interest.

3. The automatic container grabbing method for the unmanned straddle carrier according to claim 1, wherein the step of detecting the bay lines in the image based on the predicted positions comprises:
segmenting the image to obtain a plurality of segmentation results;
searching for segmentation results matching pre-stored bay line features as the bay lines in the image, within set ranges around the predicted positions.

4. The automatic container grabbing method for the unmanned straddle carrier according to claim 1, wherein after the step of detecting the bay lines in the image based on the predicted positions, and before the step of aligning intersection points of detected bay lines in the image captured by the vision sensor module of the unmanned straddle carrier to preset bay line intersection points, so as to adjust a grabbing position of the unmanned straddle carrier to a quasi-alignment position, the method further comprises:
skeletonizing the bay lines in the image to obtain the intersection points of the detected bay lines.

5. The automatic container grabbing method for the unmanned straddle carrier according to claim 1, wherein before the step of aligning center positions of lock-holes in the image captured by the vision sensor module of the unmanned straddle carrier to preset hook positions, so as to adjust the grabbing position of the unmanned straddle carrier from the quasi-alignment position to an alignment position, the method further comprises:
segmenting the image to obtain a plurality of segmentation results;
searching for segmentation results matching pre-stored lock-hole features as the lock-holes in the image, and determining the center positions of the lock-holes in the image.

6. The automatic container grabbing method for the unmanned straddle carrier according to claim 1, wherein the step of in response to the unmanned straddle carrier being located at a set grabbing position, determining, according to relative positions between the unmanned straddle carrier and bay lines of a container to be aligned, predicted positions of the bay lines within an image captured by a vision sensor module of the unmanned straddle carrier comprises steps of:
acquiring positioning information of the unmanned straddle carrier from a positioning module of the unmanned straddle carrier;
determining position information of the bay lines of the container to be aligned from a preset map;
determining the relative positions between the unmanned straddle carrier and the bay lines of the container to be aligned according to the positioning information of the unmanned straddle carrier and the position information of the bay lines of the container to be aligned.

7. The automatic container grabbing method for the unmanned straddle carrier according to claim 6, wherein the step of determining the relative positions between the unmanned straddle carrier and the bay lines of the container to be aligned according to the positioning information of the unmanned straddle carrier and the position information of the bay lines of the container to be aligned comprises:
determining the relative positions between the unmanned straddle carrier and the bay lines of the container to be aligned within map coordinates of the preset map, according to the positioning information of the unmanned straddle carrier and the position information of the bay lines of the container to be aligned.

8. An automatic container grabbing apparatus for the unmanned straddle carrier applied to the automatic container grabbing method for the unmanned straddle carrier according to any one of claims 1 to 7, wherein the apparatus comprises:
a predicted position determination module, configured to in response to the unmanned straddle carrier being located at a set grabbing position, determine, according to relative positions between the unmanned straddle carrier and bay lines of a container to be aligned, predicted positions of the bay lines within an image captured by a vision sensor module of the unmanned straddle carrier;
a bay line detection module, configured to detect the bay lines in the image based on the predicted positions;
a first grabbing position adjustment module, configured to align intersection points of detected bay lines in the image captured by the vision sensor module of the unmanned straddle carrier to preset bay line intersection points, so as to adjust a grabbing position of the unmanned straddle carrier to a quasi-alignment position;
a second grabbing position adjustment module, configured to align center positions of lock-holes in the image captured by the vision sensor module of the unmanned straddle carrier to preset hook positions, so as to adjust the grabbing position of the unmanned straddle carrier from the quasi-alignment position to an alignment position.

9. An electronic device, comprising:
a processor;
a memory having computer programs stored thereon, wherein the computer programs, when executed by the processor, implement the automatic container grabbing method for the unmanned straddle carrier according to any one of claims 1 to 7.

10. A computer storage medium having computer programs stored thereon, wherein the computer programs, when executed by a processor, implement the automatic container grabbing method for the unmanned straddle carrier according to any one of claims 1 to 7.
